(19) **Europäisches Patentamt** / **European Patent Office** / **Office européen des brevets**

(11) **EP 2 939 350 B1**

(12) # EUROPEAN PATENT SPECIFICATION

(45) Date of publication and mention of the grant of the patent:
**20.02.2019 Bulletin 2019/08**

(21) Application number: **13814537.0**

(22) Date of filing: **19.12.2013**

(51) Int Cl.:
**H04B 7/0452** (2017.01)      **H04B 7/0417** (2017.01)

(86) International application number:
**PCT/EP2013/077438**

(87) International publication number:
**WO 2015/090417 (25.06.2015 Gazette 2015/25)**

(54) **METHOD AND APPARATUS FOR MULTI-USER MULTIPLE-INPUT AND MULTIPLE-OUTPUT PRECODING**

VERFAHREN UND VORRICHTUNG FÜR MEHRNUTZER-MIMO-VORCODIERUNG

PROCÉDÉ ET APPAREIL DE PRÉCODAGE MULTIUTILISATEURS À ENTRÉES ET SORTIES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2015 Bulletin 2015/45**

(73) Proprietor: **Huawei Technologies Co., Ltd. Longgang**
**Shenzhen, Guangdong 518129 (CN)**

(72) Inventors:
• **EZRI, Doron**
**80992 Munich (DE)**
• **SHILO, Shimi**
**80992 Munich (DE)**
• **SUN, Fuqing**
**80992 Munich (DE)**
• **RUAN, Wei**
**80992 Munich (DE)**
• **FAN, Ronghu**
**80992 Munich (DE)**

(74) Representative: **Kreuz, Georg Maria**
**Huawei Technologies Duesseldorf GmbH**
**Riesstraße 25**
**80992 München (DE)**

(56) References cited:
**US-A1- 2011 222 615**

• **RIBEIRO C B ET AL: "Performance of linear multi-user MIMO precoding in LTE system", WIRELESS PERVASIVE COMPUTING, 2008. ISWPC 2008. 3RD INTERNATIONAL SYMPOSIUM ON, IEEE, PISCATAWAY, NJ, USA, 7 May 2008 (2008-05-07), pages 410-414, XP031281271, ISBN: 978-1-4244-1652-3**
• **MUNOZ-MEDINA O ET AL: "Coordinated MIMO precoding for power minimization in femtocell systems", GLOBECOM WORKSHOPS (GC WKSHPS), 2011 IEEE, IEEE, 5 December 2011 (2011-12-05), pages 264-269, XP032124590, DOI: 10.1109/GLOCOMW.2011.6162450 ISBN: 978-1-4673-0039-1**

**Description**

TECHNICAL FIELD

The present application relates to the field of beamforming technology in wireless communications, and particularly to a method and an apparatus for multi-user multiple-input and multiple-output precoding as well as to an access point comprising such an apparatus for multi-user multiple-input and multiple-output precoding.

BACKGROUND

Wireless communication systems are racing towards better coverage, capacity and link quality in given deployment scenarios. For example in the high-end Wi-Fi market, vendors make a serious effort to design the highest performance access-point (AP).
One of the key technologies to achieve such goals is Multi-User (MU) Multiple-Input and Multiple-Output (MIMO) which allows an AP to transmit simultaneously to several clients using the same resources.
WO 2011/136473 A2 describes a method for avoiding interference in a wireless communication system and an apparatus supporting the same. The described method for avoiding interference by an access point in a wireless local area network (WLAN) system includes: acquiring first effective channel information between the access point and a first station targeted for multi user-multiple input multiple output transmission; acquiring second effective channel information between the access point and a second station that receives data from a third station during the MU-MIMO transmission; and performing the MU-MIMO transmission to a target station including the first station by beamforming based on an interference-avoiding precoding that eliminates interference due to data transmission from the third station to the second station from a receiving signal of the first station and interference due to the MU-MIMO transmission from a receiving signal of the second station.
RIBEIRO C B ET AL: "Performance of linear multi -user MIMO preceding in LTE system" WIRELESS PERVASIVE COMPUTING, 2008. ISWPC 2008. 3RD INTERNATIONAL SYMPOSIUM ON, IEEE, PISCATAWAY, NJ, USA, 7 May 2008 (2008-05-07), pages 410-414 relates to performance of MU-MIMO operation in LTE for different frequency granularities of the precoder at the OFDM transmitter.
US 2011/222615 A1 relates to a method and apparatus for generating a precoder of uplink transmission from a mobile station.
MUNOZ-MEDINA O ET AL: "Coordinated MIMO preceding for power minimization in femtocell systems", GLOBECOM WORKSHOPS (GC WKSHPS), 2011 IEEE, IEEE. 5 December 2011 (2011-12-05), Pages 264-269, relates to coordinated radio resource allocation in the downlink for a set of femtocells operating on the same band under OFDMA access.

SUMMARY AND DESCRIPTION

It is the object of the invention to provide an improved technique for beamforming technology in wireless communications.
This object is achieved by the features of the independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.
According to a first aspect, a method for multi-user multiple-input and multiple-output (MU-MIMO) precoding is provided, the method comprising the steps of: receiving at least one preliminary precoder from each beamformee out of a multiplicity of beamformees of a multi-user multiple-input and multiple-output system; selecting a group of active beamformees out of the multiplicity of beamformees, wherein a beamformer transmits to the active beamformees in an multi-user multiple-input and multiple-output mode; and calculating at least one adjusted precoder for each beamformee of the group of active beamformees by means of calculating a pseudo inverse of a precoding matrix comprising each of the preliminary precoder of the active beamformees.
In the present invention we consider a communications system in which each beamformee feedbacks its respective preliminary precoding Matrix/vector to the beamformee. This case is relevant for practical communications standards (e.g., the IEEE802.11ac). In such a case the beamformer may not be equipped with knowledge of the whole MIMO channel matrix (or an approximation of it), which is the common case in the literature. Moreover, the exact weight calculation method is often implementation specific and not specified by practical communications standards (e.g., the IEEE802.11ac).
In this invention, a novel beamforming method which reduces Multi-User Interference (MUI) and gives superior performance compared to the state-of-the-art is described.

The present invention advantageously provides low-cost in terms of computational complexity and flexibility in controlling multi-user interference MUI (e.g., make sure a sensitive transmission experiences lower MUI, than a more robust transmission).

In a first possible implementation form of the method according to the first aspect, the precoding matrix is based on the at least one preliminary precoder from each of the beamformees.

In a second possible implementation form of the method according to the first implementation form of the first aspect or according to the first aspect as such, a sensitivity parameter for each beamformee of the group of active beamformees is calculated.

In a third possible implementation form of the method according to the second possible implementation form of the method according to the first aspect as such, the at least one adjusted precoder for each beamformee of the group of active beamformees is calculated based on the sensitivity parameter.

In a fourth possible implementation form of the method according to the third possible implementation form of the method, the sensitivity parameter is used as a basis for a linear combination of the preliminary precoder and/or the adjusted precoder providing a sensitivity metric by means of a sensitivity differentiated precoding scheme.

In a fifth possible implementation form of the method according to the first aspect as such or according to the any of the preceding implementation forms of the first aspect, multiple streams are transmitted by the beamformer to at least one beamformee within the group of active beamformees.

In a sixth possible implementation form of the method according to the first aspect as such or according to the any of the preceding implementation forms of the first aspect, the preliminary precoder from each of the beamformees is an optimized precoder regarding data transmission from the beamformer to the beamformee according to a single user scenario.

In a seventh possible implementation form of the method according to the first aspect as such or according to the any of the preceding implementation forms of the first aspect, the method is applicable for different subcarriers or subcarrier groups.

According to a second aspect, an apparatus for multi-user multiple-input and multiple-output precoding is provided, the apparatus comprising: a receiving unit configured to receive at least one preliminary precoder from each beamformee out of a multiplicity of beamformees of a multi-user multiple-input and multiple-output system; a selection unit configured to select a group of active beamformees out of the multiplicity of beamformees; and a calculating unit configured to calculate at least one adjusted precoder for each beamformee of the group of active beamformees by means of calculating a pseudo inverse of a precoding matrix comprising each of the preliminary precoder of the active beamformees.

In a first possible implementation form of the apparatus according to the second aspect, the calculating unit is configured to calculate a sensitivity parameter for each beamformee of the group of active beamformees.

In a second possible implementation form of the first possible implementation form of the apparatus according to the second aspect, the calculating unit is configured to calculate the at least one adjusted precoder for each beamformee of the group of active beamformees based on the sensitivity parameter.

In a third possible implementation form of the apparatus according to the second possible implementation form, the calculating unit is configured to calculate the sensitivity parameter in form of a basis for a linear combination of the preliminary precoder and/or the adjusted precoder providing a sensitivity metric by means of a sensitivity differentiated precoding scheme.

According to a third aspect, a beamformer for use in a wireless communication network is provided, the beamformer comprising an apparatus according to the second aspect as such or according to the any of the preceding implementation forms of the second aspect.

The methods, systems and devices described herein may be implemented as software in a digital signal processor, DSP, in a micro-controller or in any other side-processor or as hardware circuit within an application specific integrated circuit, ASIC or in a field-programmable gate array, FPGA, which is an integrated circuit designed to be configured by a customer or a designer after manufacturing hence field-programmable.

The invention can be implemented in digital electronic circuitry, or in computer hardware, firmware, software, or in combinations thereof, e.g. in available hardware of conventional mobile devices or in new hardware dedicated for processing the methods described herein.

BRIEF DESCRIPTION OF THE DRAWINGS

Further embodiments of the invention will be described with respect to the following figures, in which:

Fig. 1 shows a schematic diagram of one beamformer in form of one access point and two receivers in form of two beamformees according to a further embodiment of the invention;

Fig. 2 shows a beamforming apparatus for multi-user multiple-input and multiple-output precoding according to an embodiment of the invention;

Fig. 3 shows a beamforming apparatus for multi-user multiple-input and multiple-output precoding according to a further embodiment of the invention;

Fig. 4 shows a flowchart diagram of a method for multi-user multiple-input and multiple-output precoding according to a further embodiment of the invention;

Fig. 5 shows a flowchart diagram of a method for multi-user multiple-input and multiple-output precoding according to a further embodiment of the invention; and

Fig. 6 shows performance results of the method for multi-user multiple-input and multiple-output precoding compared to a standard method, according to a further embodiment of the invention.

DETAILED DESCRIPTION

In the figures, identical reference signs denote identical or equivalent elements. In addition, it should be noted that all of the accompanying drawings are not to scale.

The technical solutions in the embodiments of the present invention are described clearly and completely in the following with reference to the accompanying drawings in the embodiments of the present invention.

Apparently, the described embodiments are only some embodiments of the present invention, rather than all embodiments. Based on the embodiments of the present invention, all other embodiments obtained by persons of ordinary skill in the art without making any creative effort shall fall within the protection scope of the present invention.

The beamformer may be implemented as a multiple antenna transmitter and the beamformee may be implemented as a client/server entity.

A beamformer may be a system which performs adaptive spatial signal processing with an array of transmitters or receivers. The signals may be combined in a manner which increases the signal strength to/from a chosen direction. Signals to/from other directions may be combined in a constructive or destructive manner, resulting in degradation of the signal to/from the undesired direction.

A beamformer may use the principle of superposition of waves which states that when two or more propagating waves of like type are incident on the same point, the total displacement at that point is equal to the vector sum of the displacements of the individual waves.

In the figures, the terms "access points" and "client" as well as the reference signs "AP" or "C" denote the elements "beamformer" and "beamformee", respectively.

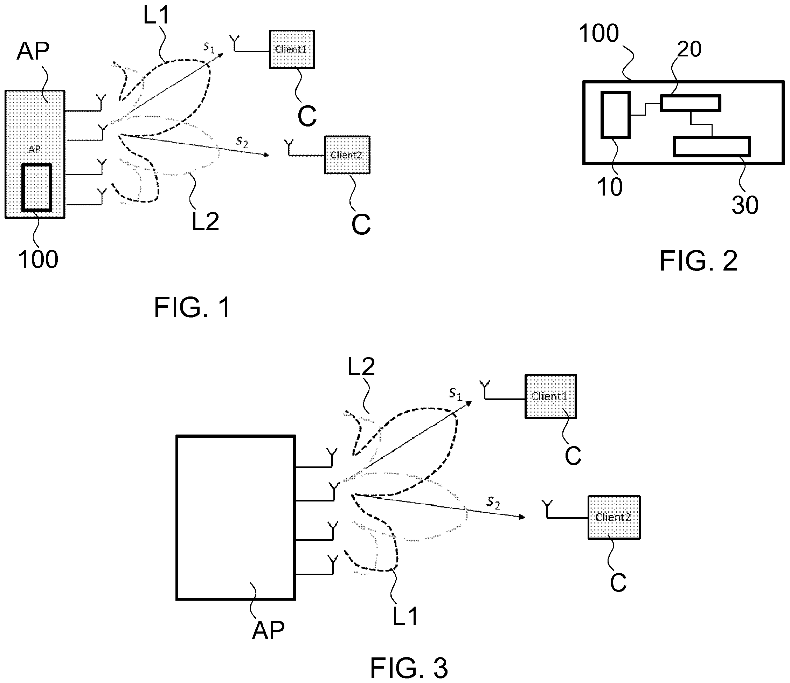

Figure 1 shows a schematic diagram of one beamformer (transmitter) and two beamformees (receivers) according to an embodiment of the invention.

Multi-user MIMO (MU-MIMO) is considered one of the technological building-blocks of advanced communication systems, such as 802.11ac and LTE-Advanced. In MU-MIMO, a beamformer (e.g. an 11ac AP) with M transmit (Tx) antennas transmits, on the same time and frequency resources, to $K \geq 1$ beamformees (e.g. multiple 11ac clients). Each beamformee, equipped with receive (Rx) antennas, is addressed with $L_k$ spatial steams pointing at it, such that the total the total number of streams $L$ satisfies

$$L = \sum_{k=1}^{K} L_k \leq M.$$

For example, a beamformer with four Tx-antennas can transmit to four beamformees, one stream for each beamformee. Alternatively, the beamformer can transmit two streams to one beamformee equipped with at least two antennas and two streams to another beamformee equipped with at least two antennas.

A natural advantage of MU-MIMO is multi-user diversity. Here, if beamformees are chosen to be sufficiently apart from each other, their respective channels are expected to be different or diverse representing a big advantage over single user MIMO. Moreover, a natural obstacle is multi-user interference (MUI). The signal addressing Beamformee 1, denoted client 1, is also received by Beamformee 2, denoted client 2, and serves as interference. This means that some method to maximize the desired signal strength and minimize the interference, received by each beamformee, is to be invoked. Such a method is beamforming (BF) with null-steering representing a practical method, which is endorsed by 802.11ac and LTE/LTE-A.

For illustrating beamforming with null-steering as shown in Figure 1, a beamformer AP with four Tx antennas and one beamforming apparatus 100 is present, transmitting to two beamformees C, two streams S1, S2 to each client equipped with two Rx antennas.

The four Rx antennas of the beamformer AP generating a RF field with two lobes L1, L2. Assuming OFDM transmission with sufficiently long CP, the received signal vector on the subcarrier level is

$$\mathbf{y} = \begin{bmatrix} \mathbf{y}_1 \\ \mathbf{y}_2 \end{bmatrix} = \begin{bmatrix} \mathbf{H}_1 \\ \mathbf{H}_2 \end{bmatrix} \mathbf{x}_{4\times1} + \rho\mathbf{n},$$

where $\mathbf{x}_{4\times1}$ is the signal transmitted from all four Tx antennas, $\mathbf{y}_k$ is the $2\times1$ signal received at the k-th client, and $\mathbf{H}_k$ is the $2 \times 2$ channel to the k-th client.

In BF, the transmitted symbols vector $\mathbf{s}_{4\times1}$ is linearly precoded with a weight matrix $\mathbf{W}_{4\times4}$ such that the transmitted signal is

$$\mathbf{x}_{4\times1} = \mathbf{W}_{4\times4}\mathbf{s}_{4\times1}.$$

A further precoding method is given by the matrix inverse precoding method.

Naturally, any selection of **W** satisfying

$$\mathbf{HW} = \text{block diag matrix}$$

will eliminate the MUI. A particular selection is the right pseudo inverse (or simply inverse in our case) of **H**

$$\mathbf{W} = \mathbf{H}^{-1} \Rightarrow \mathbf{HH}^{-1} = \mathbf{I}.$$

A power constraint (to maintain constant, e.g., unit, Tx power) may also be introduced, for example through

$$\mathbf{W}(:,k) = \frac{1}{\sqrt{4}} \frac{\mathbf{H}^{-1}(:,k)}{\left\|\mathbf{H}^{-1}(:,k)\right\|}.$$

The matrix inverse precoding exemplifies two fundamental issues with MU-MIMO:

In order to leverage MU diversity, the clients should be grouped into groups of clients with minimal channel correlation.

The precoding process (as well as selection process above) depends strongly on channel knowledge at the transmitter - poor knowledge will lead to poor cancellation and therefore high MUI.

There are basically two methods to obtain channel knowledge at the transmitter through channel reciprocity (e.g., implicit feedback) and through explicit digital feedback. Note, however, that in large MIMO dimensionality the feedback of the whole channel matrix (per subcarrier) might imply serious overhead.

A further precoding method is given by the feedback based precoding method. For example, the IEEE802.11ac adopts a slightly different approach. Here each beamformee feedbacks (a quantized version of) the precoding vector/matrix it prefers (per a group of subcarriers). For example in the case of single stream per beamformee, the optimal solution is defined as:

$$\hat{\mathbf{w}}_i = \arg\max_{\|\mathbf{w}_i\|=1} \left\|\mathbf{H}_i\hat{\mathbf{w}}_i\right\|^2 \Rightarrow \left(\mathbf{H}_i^*\mathbf{H}_i\right)\hat{\mathbf{w}}_i = \lambda_i\hat{\mathbf{w}}_i$$

which means that $\hat{\mathbf{w}}_i$ is the principle singular vector of $\mathbf{H}_i$. This feedback scheme is advantageously reasonable. First, the singular vector bears less information than the whole matrix (less overhead). Second, as $\hat{\mathbf{w}}_i$ is a singular vector of $\mathbf{H}_i$, any vector orthogonal to it will remain orthogonal at the immediate (linear/MRC) receiver.

$$\left(\mathbf{H}_i\boldsymbol{\xi}\right)^*\left(\mathbf{H}_i\hat{\mathbf{w}}_i\right) = \boldsymbol{\xi}^* \underbrace{\mathbf{H}_i^*\mathbf{H}_i\hat{\mathbf{w}}_i}_{\lambda_i\hat{\mathbf{w}}_i} = \lambda_i\boldsymbol{\xi}^*\hat{\mathbf{w}}_i = 0 \forall \boldsymbol{\xi}^*\hat{\mathbf{w}}_i = 0$$

which gives rise to an efficient group selection principle.

The further reference signs shown in Figure 1 will be described in the description of Figure 2 and 3.

Figure 2 shows a beamforming apparatus for multi-user multiple-input and multiple-output precoding according to an embodiment of the invention.

Figure 2 shows an apparatus 100 for multi-user multiple-input and multiple-output precoding, the apparatus 100 comprising: a receiving unit 10, a selection unit 20, and a calculating unit 30.

The receiving unit 10 may be configured to receive at least one preliminary precoder from each beamformee out of a multiplicity of beamformees of a multi-user multiple-input and multiple-output system.

The selection unit 20 may be configured to select a group of active beamformees out of the multiplicity of beamformees.

The calculating unit 30 may be configured to calculate at least one adjusted precoder for each beamformee of the group of active beamformees by means of calculating a pseudo inverse of a precoding matrix comprising each of the preliminary precoder of the active beamformees.

Figure 3 shows a beamforming apparatus for multi-user multiple-input and multiple-output precoding according to a further embodiment of the invention.

For simplicity, a case of two beamformees is illustrated in Figure 2, according to one embodiment of the invention, each beamformee C with a respective single stream and endowed with multiple Rx antennas. Each beamformee C or feedbacks its preferred precoder (e.g., its principal singular vector $\mathbf{v}_i$) per subcarrier or group of subcarriers, maximizing its own link conditions (e.g., post processing SNR).

After a proper group selection, the vectors $\mathbf{v}_1$ and $\mathbf{v}_2$ are expected to feature low correlation (but not zero) on most subcarriers. Thus, a vector $\mathbf{w}_1$ that is nearly orthogonal to $\mathbf{v}_2$ (to minimize MUI to Beamformee 2) is searched, but yet as "close" as possible to $\mathbf{v}_1$, and vice-versa. If such vectors are found than post combining signal-to-interference ratio at Beamformee1 is high:

$$\frac{\left\|\mathbf{H}_1\mathbf{w}_1\right\|^2}{\left(\mathbf{H}_1\mathbf{w}_1\right)^*\left(\mathbf{H}_1\mathbf{w}_2\right)} \approx \frac{\left\|\mathbf{H}_1\mathbf{v}_1\right\|^2}{\mathbf{v}_1^*\mathbf{H}_1^*\mathbf{H}_1\mathbf{w}_2 \to 0}.$$

A low complexity solution of the problem is:

$$\begin{bmatrix}\mathbf{v}_1 & \mathbf{v}_2\end{bmatrix}^*\mathbf{W} = \mathbf{I}_{2\times 2}$$

which means that $\mathbf{W}$ is the left pseudo inverse of $[\mathbf{v}_1\ \mathbf{v}_2]^*$ reading:

$$\mathbf{W} = \begin{bmatrix}\mathbf{v}_1 & \mathbf{v}_2\end{bmatrix}\left(\begin{bmatrix}\mathbf{v}_1 & \mathbf{v}_2\end{bmatrix}^*\begin{bmatrix}\mathbf{v}_1 & \mathbf{v}_2\end{bmatrix}\right)^{-1}.$$

Naturally, the columns of $\mathbf{W}$ may be normalized to meet a power constraint and/or differentiate the power between streams. In the case of multi-stream, where each beamformee feedbacks a matrix $\mathbf{V}_k$, the precoder may take the form:

$$\mathbf{X} = \begin{bmatrix}\mathbf{V}_1, \ldots \mathbf{V}_K\end{bmatrix}$$

$$\mathbf{W} = \mathbf{X}\left(\mathbf{X}^*\mathbf{X}\right)^{-1}.$$

A further technique relates to a differentiating MUI. In many cases, the different beamformees in the MU-MIMO group experience different signal-to-noise-ratio (SNR), for example due to different range.

Thus, different modulation and coding scheme (MCS) may be employed for each beamformee. This means that some beamformees (e.g., those with high MCS) will be more sensitive to MUI. Moreover, some beamformees send their preferred vector/matrix with rougher quantization, so it is more difficult to control their resulting MUI. These reasons lead to a conclusion that controlling and differentiating the level of MUI experienced by beamformees may significantly improve the MU-MIMO performance.

Optionally, according to one embodiment of the invention, considering again two single steam beamformees C each endowed with at least one Rx antennas:

- client 1 employing high MCS (sensitive to MUI)

- client 2 employing low MCS (less sensitive to MUI)

Considering the following differentiated precoding scheme of preliminary precoders:

The precoder respective to Beamformee 1 would be exactly the precoder it prefers - for example, its principle singular vector $\mathbf{v}_1$.

The precoder respective to Beamformee 2 would be a precoder $\mathbf{w}_2$ orthogonal to $\mathbf{v}_1$, totally eliminating the MUI experienced by Client 1 (when the preferred precoder of Beamformee1 is its primary singular vector), but still "close" to $\mathbf{v}_2$.

While MUI to Beamformee 1 is eliminated, MUI to Client 2 is not, as $\mathbf{w}_2$ is not a singular vector of $\mathbf{H}_2$.

A practical solution to this problem is first to compute the precoding matrix as proposed above:

$$\mathbf{W} = \begin{bmatrix} \mathbf{v}_1 & \mathbf{v}_2 \end{bmatrix}\left(\begin{bmatrix} \mathbf{v}_1 & \mathbf{v}_2 \end{bmatrix}^*\begin{bmatrix} \mathbf{v}_1 & \mathbf{v}_2 \end{bmatrix}\right)^{-1}.$$

and then replace the first column with $\mathbf{v}_1$

$$\mathbf{W}(:,1) = \mathbf{v}_1.$$

This solution may be immediately extended to the case of multiple streams for each client (by replacing the vectors $\mathbf{v}_i$ with $\mathbf{V}_i$),

The solution presented above eliminates the MUI to one client from the other (or all others).

A more general solution associates each beamformee C with a sensitivity or priority metric $0 \le \alpha_k \le 1$. The higher the priority of the k-th client, the higher $\alpha_k$, so the precoding matrix takes the form:

$$\mathbf{X} = \begin{bmatrix} \mathbf{V}_1, \dots \mathbf{V}_K \end{bmatrix}$$

$$\mathbf{W} = \begin{bmatrix} \mathbf{W}_1, \dots \mathbf{W}_K \end{bmatrix} = \mathbf{X}\left(\mathbf{X}^*\mathbf{X}\right)^{-1}$$

$$\widetilde{\mathbf{W}}_k = \left(1 - \alpha_k\right)\mathbf{W}_k + \alpha_k\mathbf{V}_k.$$

Naturally, the weights $\alpha_k$ should be determined bearing in mind that only a single beamformee may have its MUI eliminated.

The further elements and modules shown in Figure 3 were already described in the description of Figure 1 and Figure 2 and are therefore not explained again.

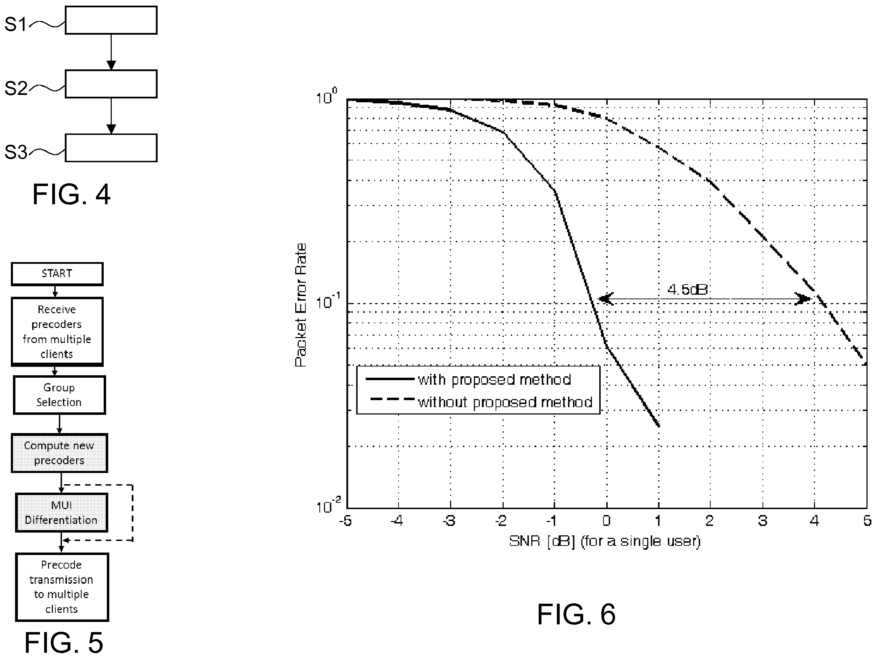

Figure 4 shows a flowchart diagram of a method for multi-user multiple-input and multiple-output precoding according to a further embodiment of the invention.

Figure 4 shows a method for multi-user multiple-input and multiple-output precoding, the method comprises the following steps.

As a first step of the method, receiving S1 at least one preliminary precoder from each beamformee out of a multiplicity of beamformees of a multi-user multiple-input and multiple-output system is performed.

As a second step of the method, selecting S2 a group of active beamformees out of the multiplicity of beamformees is performed, wherein a beamformer transmits to the active beamformees in a multi-user multiple-input and multiple-output mode.

As a third step of the method, calculating S3 at least one adjusted precoder for each beamformee of the group of active beamformees by means of calculating a pseudo inverse of a precoding matrix comprising each of the preliminary precoder of the active beamformees is conducted.

Optionally, according to one embodiment of the invention, the method may be applicable for different subcarriers or subcarrier groups.

Fig. 5 shows a flowchart diagram of a method for multi-user multiple-input and multiple-output precoding according to a further embodiment of the invention.

As a first step of the method, a start routine is performed, initializing the beamformer and/or the beamformees and/or the wireless network.

As a second step of the method, receiving preliminary precoders from multiple beamformees is performed.

As a third step of the method, a group selection, e.g. creating a group of active beamformees is performed.

As a fourth step of the method, computing new precoders is conducted. For example, a low-complex linear precoder calculation is performed.

As a fifth step of the method, a MUI differentiation is conducted. The MUI differentiation may comprise interference considerations for traffic with different priorities.

As a sixth step of the method, a precode transmission to multiple beamformees C is performed.

Fig. 6 shows performance results of the proposed MU-MIMO precoding method compared to a standard method, of employing the preferred precoder for each beamformee, according to a further embodiment of the invention.

The Y-axis shows the packet error rate, the x-axis plots the Signal-to-noise ratio (often abbreviated SNR or S/N) which is a measure that compares the level of a desired signal to the level of background noise.

In Figure 6, the case of two active beamformees C selected out of 10 as a group of beamformees C is plotted in the two-dimensional graph, each beamformee C with a single spatial stream and one Rx antenna.

The beamformer has four Tx antennas, and 16QAM rate ½ is used. The graph as illustrated in Figure 6 clearly shows the significant advantage of the method for multi-user multiple-input and multiple-output precoding compared to a standard method. At PER=10^-1, there is a 4.5 dB gap over a transmission protocol not utilizing the proposed method for multi-user multiple-input and multiple-output precoding.

The present disclosure also supports a computer program product including computer executable code or computer executable instructions that, when executed, causes at least one computer to execute the performing and computing steps described herein.

Many alternatives, modifications, and variations will be apparent to those skilled in the art in light of the above teachings. Of course, those skilled in the art readily recognize that there are numerous applications of the invention beyond those described herein.

While the present invention has been described with reference to one or more particular embodiments, those skilled in the art recognize that many changes may be made thereto without departing from the scope of the present invention. It is therefore to be understood that within the scope of the appended claims, the inventions may be practiced otherwise than as specifically described herein.

In the claims, the word "comprising" does not exclude other elements or steps, and the indefinite article "a" or "an" does not exclude a plurality. A single processor or other unit may fulfil the functions of several items recited in the claims.

The mere fact that certain measures are recited in mutually different dependent claims does not indicate that a combination of these measured cannot be used to advantage.

A computer program may be stored or distributed on a suitable medium, such as an optical storage medium or a solid-state medium supplied together with or as part of other hardware, but may also be distributed in other forms, such as via the Internet or other wired or wireless telecommunication systems.

**Claims**

1. A method for multi-user multiple-input and multiple-output, MU-MIMO, precoding using a precoding matrix $W^\sim_k$, the method comprising the steps of:

   receiving (S1) at least one preliminary precoder $V_k$ from each beamformee k (C) out of a multiplicity of beamformees of a MU-MIMO system;
   selecting (S2) a group of K active beamformees out of the multiplicity of beamformees, wherein a beamformer (AP) transmits to the K active beamformees in MU-MIMO mode; and
   calculating (S3) at least one adjusted precoder $W_k$ for each beamformee k of the group of active beamformees by means of calculating a pseudo inverse of a precoding matrix X comprising each of the preliminary precoder $V_k$ of the active beamformees, wherein a sensitivity parameter for each beamformee of the group of active beamformees is calculated and
   the sensitivity parameter comprises a sensitivity metric $\alpha_k$, with $0 \leq \alpha_k \leq 1$, reflecting a priority of each beamformee of the group of active beamformees, wherein the higher the priority of the k-th beamformee, the higher $\alpha_k$, and

wherein the precoding matrix $\tilde{W}_k$ is determined by:

$$\mathbf{X} = \begin{bmatrix} \mathbf{V}_1, \ldots \mathbf{V}_K \end{bmatrix}$$

$$\mathbf{W} = \begin{bmatrix} \mathbf{W}_1, \ldots \mathbf{W}_K \end{bmatrix} = \mathbf{X}\left(\mathbf{X}^*\mathbf{X}\right)^{-1}$$

$$\widetilde{\mathbf{W}}_k = \left(1 - \alpha_k\right)\mathbf{W}_k + \alpha_k \mathbf{V}_k.$$

2. The method according to claim 1, wherein multiple streams are transmitted by the beamformer to at least one beamformee within the group of active beamformees.

3. The method according to one of the preceding claims 1 to 2, wherein the preliminary precoder from each of the beamformees is an optimized precoder regarding data transmission from the beamformer to the beamformee according to a single user scenario.

4. The method according to one of the preceding claims 1 to 3, wherein the method is applicable for different subcarriers or subcarrier groups.

5. An apparatus (100) for multi-user multiple-input and multiple-output precoding, using a precoding matrix $\tilde{W}_k$, the apparatus (100) comprising:

a receiving unit (10) configured to receive at least one preliminary precoder $V_k$ from each beamformee k (C) out of a multiplicity of beamformees of a MU-MIMO system;
a selection unit (20) configured to select a group of K active beamformees out of the multiplicity of beamformees; and
a calculating unit (30) configured to calculate at least one adjusted precoder $W_k$ for each beamformee k of the group of K active beamformees by means of calculating a pseudo inverse of a precoding matrix X comprising each of the preliminary precoder $V_k$ of the active beamformees, wherein the calculating unit (30) is configured to calculate a sensitivity parameter for each beamformee of the group of active beamformees and the sensitivity parameter comprises a sensitivity metric $\alpha_k$, with $0 \leq \alpha_k \leq 1$, reflecting a priority of each beamformee of the group of active beamformees, wherein the higher the priority of the k-th beamformee, the higher $\alpha_k$, and wherein the precoding matrix $\tilde{W}_k$ is determined by:

$$\mathbf{X} = \begin{bmatrix} \mathbf{V}_1, \ldots \mathbf{V}_K \end{bmatrix}$$

$$\mathbf{W} = \begin{bmatrix} \mathbf{W}_1, \ldots \mathbf{W}_K \end{bmatrix} = \mathbf{X}\left(\mathbf{X}^*\mathbf{X}\right)^{-1}$$

$$\widetilde{\mathbf{W}}_k = \left(1 - \alpha_k\right)\mathbf{W}_k + \alpha_k \mathbf{V}_k.$$

6. A beamformer (AP) for use in a wireless communication network comprising an apparatus according to claim 5.

**Patentansprüche**

1. Verfahren für Mehrnutzer-MIMO-Vorcodierung (MU-MIMO, multi-user, multiple-input multiple output) unter Verwendung einer Vorcodierungsmatrix $\tilde{W}_k$, wobei das Verfahren folgende Schritte umfasst:

Empfangen (S1) von zumindest einem vorläufigen Vorcodierer $V_k$ für jedes Beamformingobjekt k (C) aus einer Vielzahl von Beamformingobjekten eines MU-MIMO-Systems;
Auswählen (S2) einer Gruppe von K aktiven Beamformingobjekten aus der Vielzahl von Beamformingobjekten, wobei ein Beamformer (AP) an die K aktiven Beamformingobjekte im MU-MIMO-Modus überträgt;

und

Berechnen (S3) von zumindest einem angepassten Vorcodierer $W_k$ für jedes Beamformingobjekt k der Gruppe von aktiven Beamformingobjekten mittels Berechnen eines Pseudo-Inversen einer Vorcodierungsmatrix X, die jeden der vorläufigen Vorcodierer $V_k$ der aktiven Beamformingobjekte umfasst, wobei ein Empfindlichkeitsparameter für jedes Beamformingobjekt der Gruppe von aktiven Beamformingobjekten berechnet wird und wobei der Empfindlichkeitsparameter eine Empfindlichkeitsmetrik $\alpha_k$, mit $0 \leq \alpha_k \leq 1$, umfasst, die eine Priorität von jedem Beamformingobjekt der Gruppe der aktiven Beamformingobjekte widerspiegelt, wobei $\alpha_k$ umso höher ist, je höher die Priorität des k-ten Beamformingobjekts ist, und wobei die Vorcodierungsmatrix $\tilde{W}_k$ bestimmt wird durch:

$$X = [V_1,...,V_k]$$

$$W = [W_1,...,W_k] = X(X^*X)^{-1}$$

$$\widetilde{W}_k = (1-\alpha_k)W_k + \alpha_k V_k.$$

2. Verfahren nach Anspruch 1,
wobei mehrere Ströme durch den Beamformer auf zumindest ein Beamformingobjekt innerhalb der Gruppe von aktiven Beamformingobjekten übertragen werden.

3. Verfahren nach einem der vorhergehenden Ansprüche 1 bis 2,
wobei der vorläufige Vorcodierer von jedem der Beamformingobjekte ein optimierter Vorcodierer hinsichtlich Datenübertragung vom Beamformer auf das Beamformingobjekt entsprechend einem Einzelnutzerszenario ist.

4. Verfahren nach einem der vorhergehenden Ansprüche 1 bis 3,
wobei das Verfahren für unterschiedliche Unterträger oder Unterträgergruppen anwendbar ist.

5. Vorrichtung (100) für Mehrnutzer-MIMO-Vorcodierung unter Verwendung einer Vorcodierungsmatrix $\tilde{W}_k$, wobei die Vorrichtung (100) Folgendes umfasst:

eine Empfangseinheit (10) ausgelegt zum Empfangen von zumindest einem vorläufigen Vorcodierer $V_k$ von jedem Beamformingobjekt k (C) aus einer Vielzahl von Beamformingobjekten eines MU-MIMO-Systems;
eine Auswahleinheit (20), dazu ausgelegt, eine Gruppe von K aktiven Beamformingobjekten aus der Vielzahl der Beamformingobjekte auszuwählen; und
eine Berechnungseinheit (30), dazu ausgelegt, zumindest einen angepassten Vorcodierer $W_k$ für jedes Beamformingobjekt K der Gruppe von K aktiven Beamformingobjekten zu berechnen mittels Berechnen eines Pseudo-Inversen einer Vorcodierungsmatrix X, umfassend jeden der vorläufigen Vorcodierer $V_k$ der aktiven Beamformingobjekte, wobei
die Berechnungseinheit (30) dazu ausgelegt ist, einen Empfindlichkeitsparameter für jedes Beamformingobjekt der Gruppe von aktiven Beamformingobjekten zu berechnen
und
wobei der Empfindlichkeitsparameter eine Empfindlichkeitsmetrik $\alpha_k$, mit $0 \leq \alpha_k \leq 1$, umfasst, die eine Priorität von jedem Beamformingobjekt der Gruppe der aktiven Beamformingobjekte widerspiegelt, wobei $\alpha_k$ umso höher ist, je höher die Priorität des k-ten Beamformingobjekts ist, und wobei die Vorcodierungsmatrix $\tilde{W}_k$ bestimmt wird durch:

$$X = [V_1,...,V_k]$$

$$W = [W_1,...,W_k] = X(X^*X)^{-1}$$

$$\widetilde{W}_k = (1-\alpha_k)W_k + \alpha_k V_k.$$

**6.** Beamformer (AP) zur Verwendung in einem drahtlosen Kommunikationsnetzwerk, umfassend eine Vorrichtung nach Anspruch 5.

**Revendications**

**1.** Procédé de précodage multi-utilisateur à entrée multiple sortie multiple (MU-MIMO) au moyen d'une matrice de précodage $W_k$, le procédé comprenant les étapes consistant à :

recevoir (S1) au moins un précodeur préliminaire $V_k$ en provenance de chaque récepteur de faisceau formé $k$ (C) parmi une pluralité de récepteurs de faisceau formé d'un système MU-MIMO ;
sélectionner (S2) un groupe de $K$ récepteurs actifs de faisceau formé parmi la pluralité de récepteurs de faisceau formé, un formeur de faisceau (AP) émettant en mode MU-MIMO vers les $K$ récepteurs actifs de faisceau formé ; et
calculer (S3) au moins un précodeur réglé $W_k$ pour chaque récepteur de faisceau formé $k$ du groupe de récepteurs actifs de faisceau formé au moyen d'un calcul d'une pseudo inverse d'une matrice de précodage $X$ comprenant chaque précodeur préliminaire $V_k$ des récepteurs actifs de faisceau formé,
un paramètre de sensibilité pour chaque récepteur de faisceau formé du groupe de récepteurs actifs de faisceau formé étant calculé, et le paramètre de sensibilité comprenant un indicateur métrique de sensibilité $\alpha_k$ avec $0 \leq \alpha_k \leq 1$, reflétant une priorité de chaque récepteur de faisceau formé du groupe de récepteurs actifs de faisceau formé, plus la priorité du $k^{ième}$ récepteur de faisceau formé étant grande, plus $\alpha_k$ étant grand, et la matrice de précodage $W_k$ étant déterminée par :

$$X = [V_1, \dots, V_k],$$

$$W = [W_1, \dots, W_k] = X(X * X)^{-1},$$

$$\widetilde{W}_k = (1 - \alpha_k)W_k + \alpha_k V_k.$$

**2.** Procédé selon la revendication 1, consistant à :
dans lequel de multiples flux sont transmis par le formeur de faisceau à au moins un récepteur de faisceau formé du groupe de récepteurs actifs de faisceau formé.

**3.** Procédé selon l'une des revendications précédentes 1 et 2,
dans lequel le précodeur préliminaire en provenance de chacun des récepteurs de faisceau formé est un précodeur optimisé au regard de la transmission de données du formeur de faisceau au récepteur de faisceau formé selon un scénario à utilisateur unique.

**4.** Procédé selon l'une des revendications précédentes 1 à 3,
le procédé étant applicable à différentes sous-porteuses ou groupes de sous-porteuses.

**5.** Appareil (100) de précodage multi-utilisateur à entrée multiple sortie multiple au moyen d'une matrice de précodage $W_k$, l'appareil (100) comprenant :

une unité de réception (10), configurée pour recevoir au moins un précodeur préliminaire $V_k$ en provenance de chaque récepteur de faisceaux formés $k$ (C) parmi une pluralité de récepteurs de faisceaux formés d'un système MU-MIMO ;
une unité de sélection (20), configurée pour sélectionner un groupe de $K$ récepteurs actifs de faisceau formé parmi la pluralité de récepteurs de faisceau formé ; et
une unité de calcul (30), configurée pour calculer au moins un précodeur réglé $W_k$ pour chaque récepteur de faisceau formé $k$ du groupe de $K$ récepteurs actifs de faisceau formé au moyen d'un calcul d'une pseudo inverse d'une matrice de précodage $X$ comprenant chaque précodeur préliminaire $V_k$ des récepteurs actifs de faisceau formé,
l'unité de calcul (30) étant configurée pour calculer un paramètre de sensibilité pour chaque récepteur de faisceau formé du groupe de récepteurs actifs de faisceau formé, et

le paramètre de sensibilité comprenant un indicateur métrique de sensibilité $\alpha_k$, avec $0 \le \alpha_k \le 1$, reflétant une priorité de chaque récepteur de faisceau formé du groupe de récepteurs actifs de faisceau formé, plus la priorité du $k^{ième}$ récepteur de faisceau formé étant grande, plus $\alpha_k$ étant grand, et la matrice de précodage $W_k$ étant déterminée par :

$$X = [V_1, \ldots, V_k],$$

$$W = [W_1, \ldots, W_k] = X(X * X)^{-1},$$

$$\widetilde{W}_k = (1 - \alpha_k)W_k + \alpha_k V_k.$$

6. Formeur de faisceau (AP) destiné à être utilisé dans un réseau de communication sans fil comprenant un appareil selon la revendication 5.

FIG. 1

FIG. 2

FIG. 3

FIG. 6

FIG. 4

FIG. 5

EP 2 939 350 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011136473 A2

- US 2011222615 A1

**Non-patent literature cited in the description**

- Performance of linear multi -user MIMO preceding in LTE system. **RIBEIRO C B et al.** WIRELESS PERVASIVE COMPUTING, 2008. ISWPC 2008. 3RD INTERNATIONAL SYMPOSIUM ON. IEEE, 07 May 2008, 410-414

- Coordinated MIMO preceding for power minimization in femtocell systems. **MUNOZ-MEDINA O et al.** GLOBECOM WORKSHOPS (GC WKSHPS), 2011 IEEE. IEEE, 05 December 2011, 264-269